# EUROPEAN PATENT SPECIFICATION

(11) **EP 1 533 256 B1**
(45) Date of publication and mention of the grant of the patent: **07.11.2007**
(21) Application number: 04425461.3
(22) Date of filing: 25.06.2004
(51) Int. Cl.: B65G 47/252, B65G 47/24

(54) **Device for item overturning**
Vorrichtung zum Wenden von Gegenständen
Dispositif pour retourner des objets

(30) Priority: 20.11.2003 WO PCT/IT03/00755
(43) Date of publication of application: 25.05.2005
(73) Proprietor: Automazioni Industriali S.R.L., 25065 Lumezzane S.S. (IT)
(72) Inventor: Baglioni, Giuliano, Automazioni Industriali S.r.l., 25065 Lumezzane S.S. Brescia (IT)
(74) Representative: Crippa, Paolo Ernesto

(56) References cited:
- BE-A- 366 689
- US-A- 1 519 154
- US-A- 6 000 524
- PATENT ABSTRACTS OF JAPAN vol. 008, no. 032 (M-275), 10 February 1984 (1984-02-10) & JP 58 188228 A (ISEKI NOKI KK), 2 November 1983 (1983-11-02)

## Description

The present invention refers to a device for item overturning according to the preamble of claim 1.

These devices like the one subsequently described are generally used in the field of production lines to feed a machine, for example a tool machine, with a series of items suitably arranged for working on said machinery.

Although devices are known that are able to feed a machine with a series of items, said devices generally have a complex structure and, in spite of everything, are not particularly reliable.

In other words, these known devices present incorrect working, and feed the machinery or item pick up area with an item that is not positioned correctly for working. See, for example, the document US-A-1,519,154.

The object of the present invention is to make a device for item overturning, which is constructionally simple and particularly reliable for feeding the items.

The object is achieved with a device, in keeping with claim 1. The claims depending on this describe practicable variations.

The advantages and features of the device according to the present invention will become evident from the description reported later on of a preferred form of embodiment, which is not limiting and made with reference to the accompanying drawings, wherein:

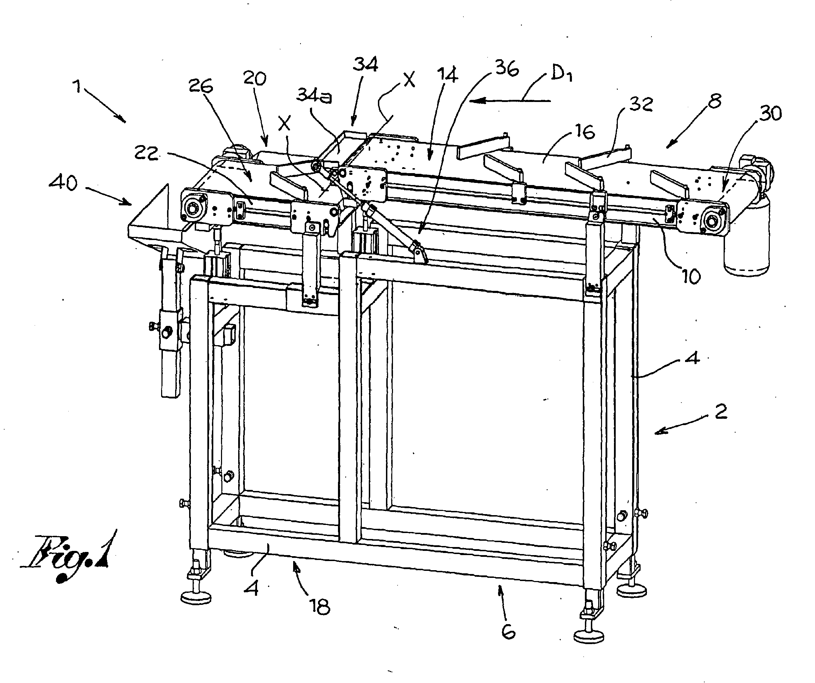

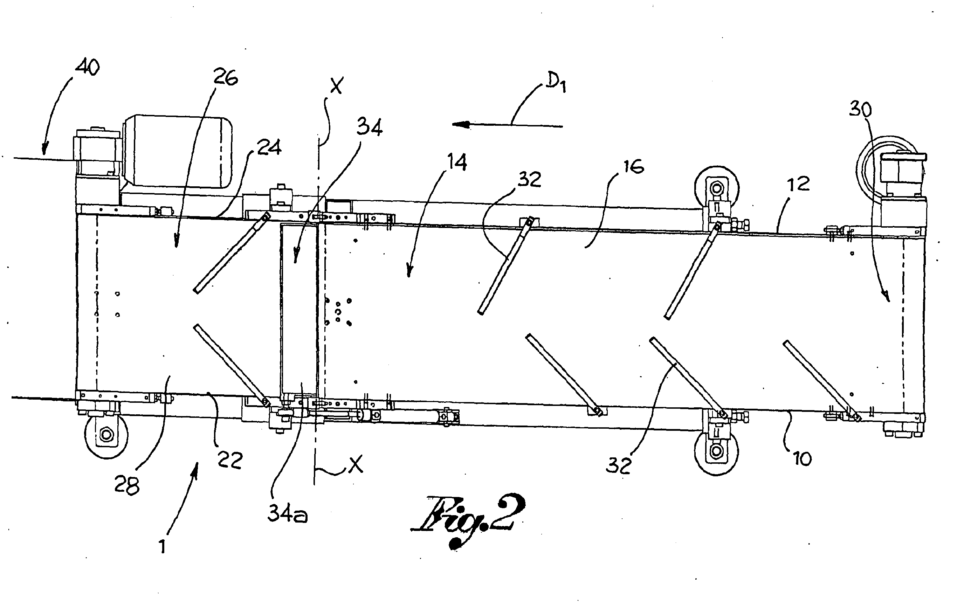

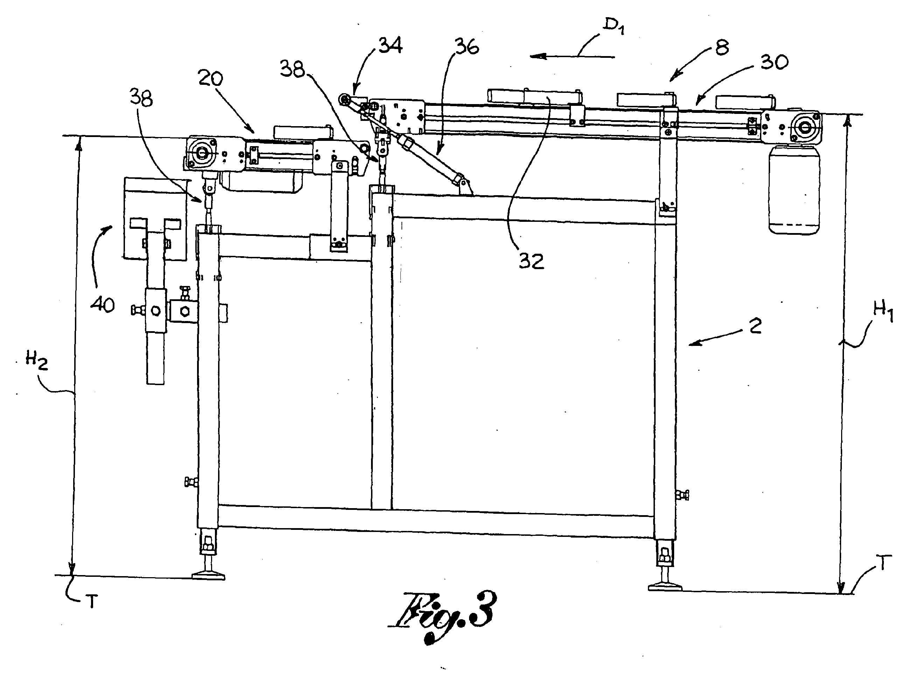

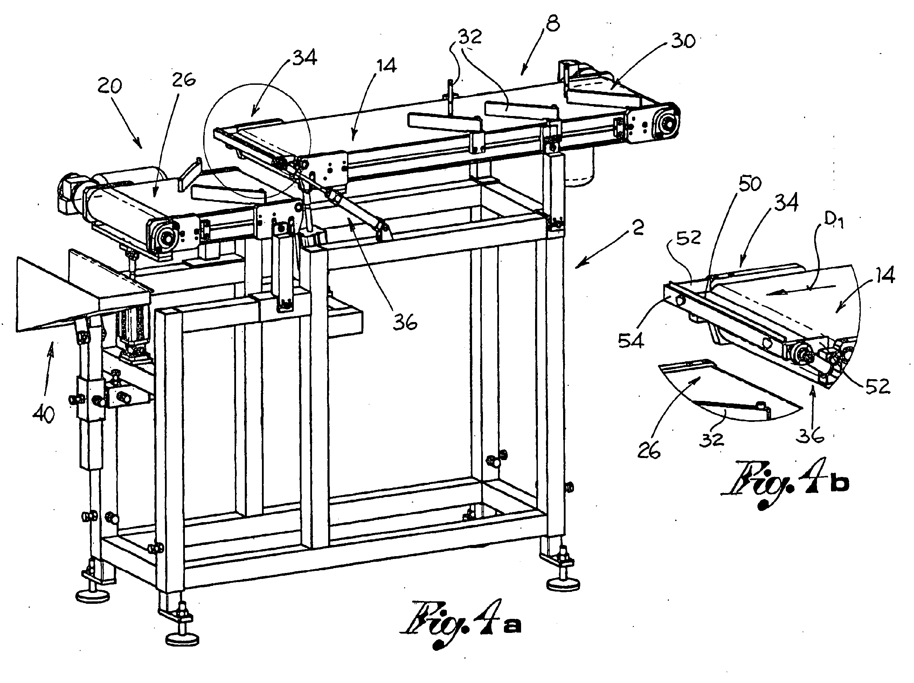

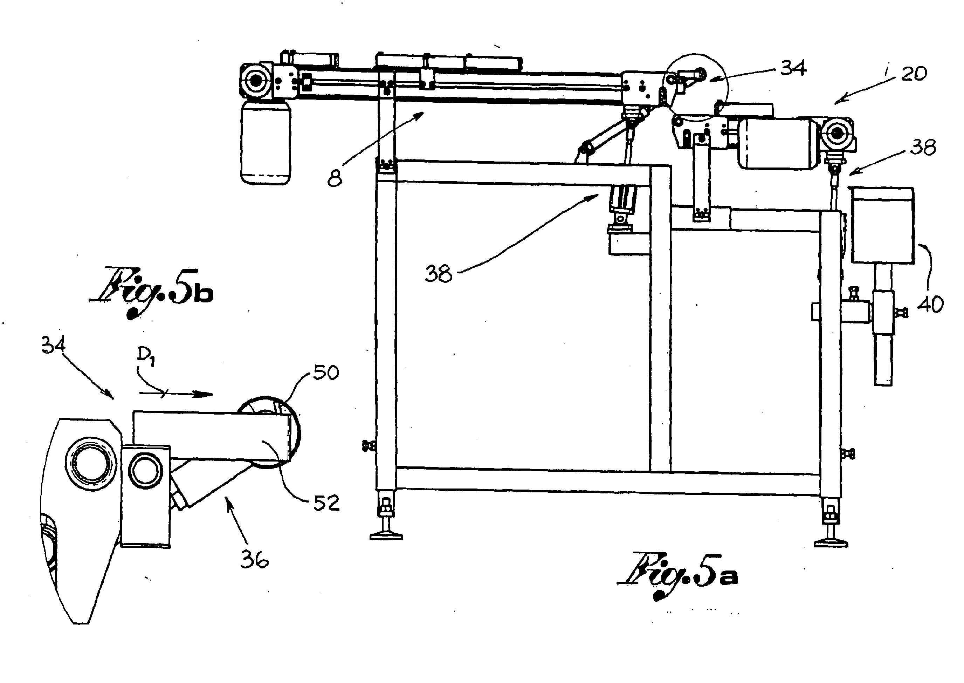

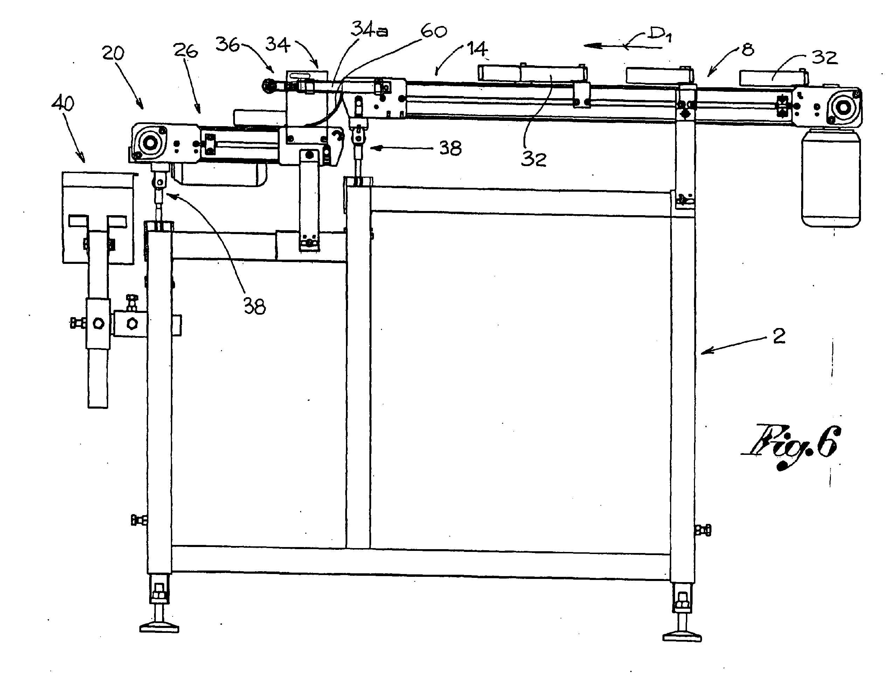

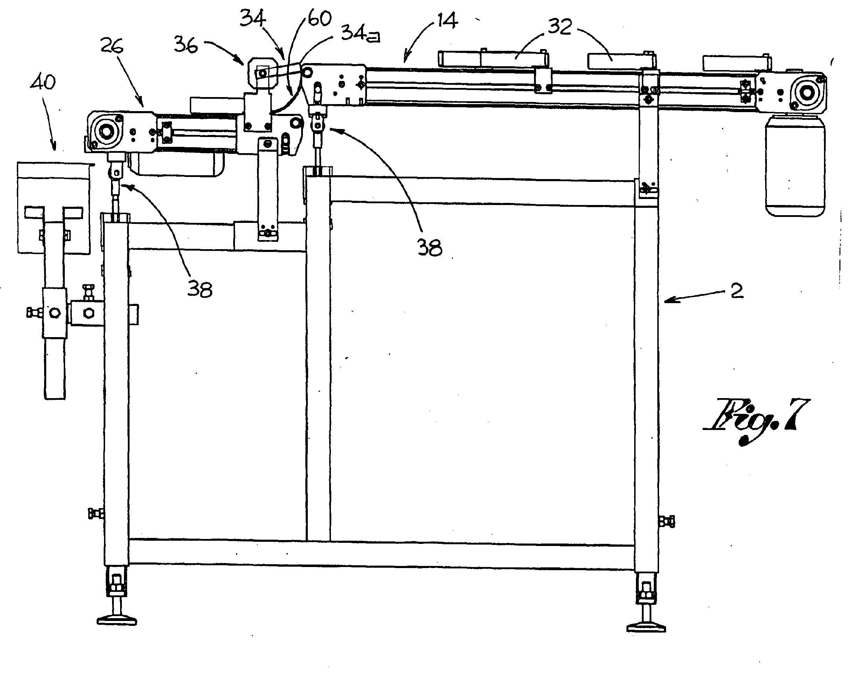

- figure 1 represents an axonometric view of a device according to a first variation of embodiment;

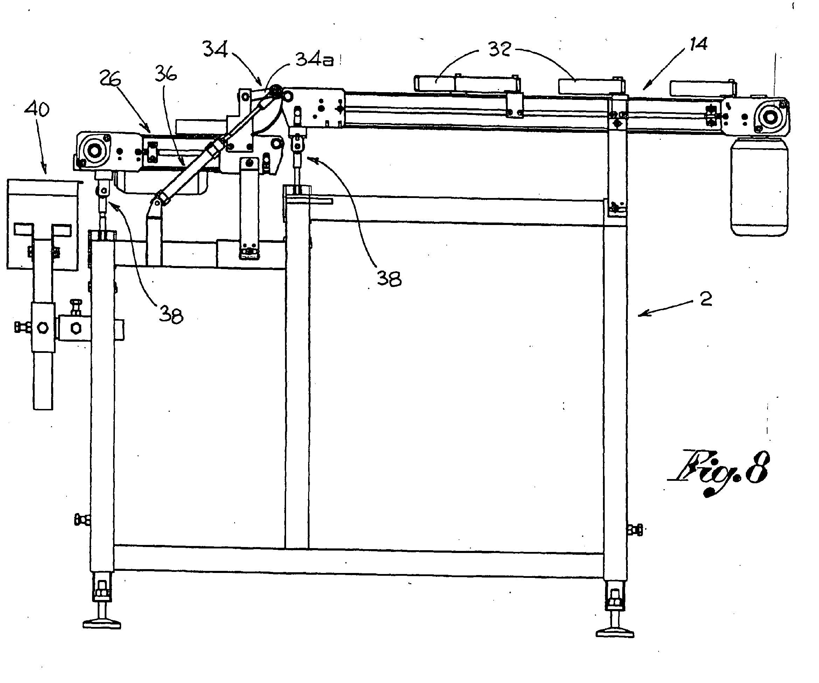

- figure 2 shows a view from above of the device in figure 1;

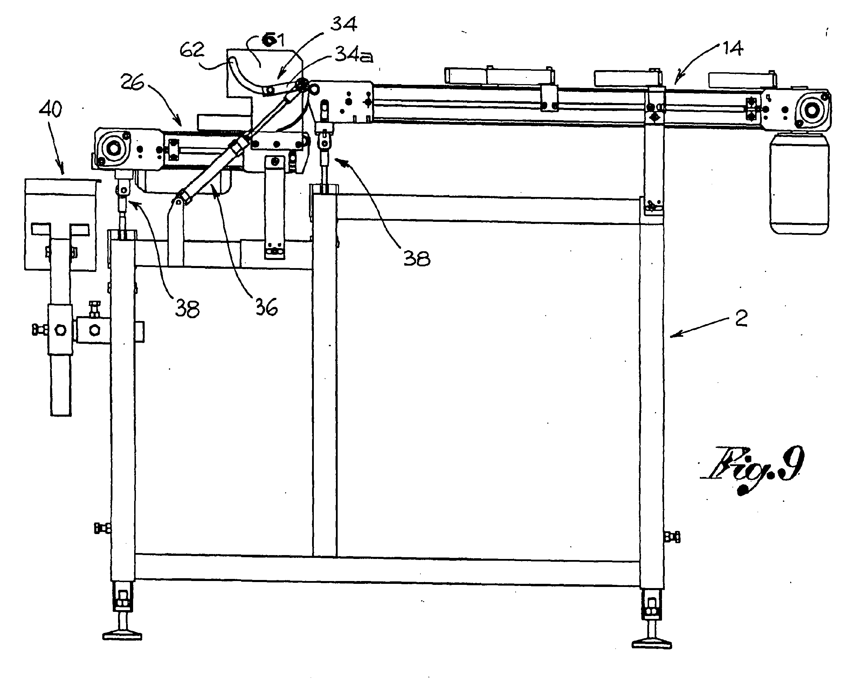

- figure 3 represents a side view of the device in figure 1;

- figures 4a and 4b show an axonometric view and an enlarged detail of the device respectively, according to the invention, in keeping with a variation of embodiment;

- figures 5a and 5b represent a side view and an enlarged detail respectively of the device in figure 4a;

- the figures from 6 to 11 each show a side view of the device according to the invention in keeping with further practicable variations.

With reference to the accompanying drawings, a device for item overturning is globally indicated with reference numeral 1.

In a preferred form of embodiment, said device comprises a supporting structure 2, for example a structure comprising a variety of beams 4.

Said supporting structure 2 rests on a plane defined as a horizontal reference plane, with T-T trace.

A first part 6 of said supporting structure 2 is adapted to support a first belt device 8, comprising supporting crosspieces 10, 12 and a conveyor belt 14.

Said first belt device 8 has at least one of its parts set at a first height H₁, in relation to said reference plane.

The first conveyor belt 14 is preferably fitted with a cover 16 made of a material that is adapted to drag the items on said conveyor belt.

Moreover, said cover 16 preferably has a colour that is adapted to make a chromatic contrast with the items, said chromatic contrast being adapted to aid the acquisition of the image of the items resting on the cover with acquisition devices, such as a telecamera.

Moreover, a second part 18 of said supporting structure 2 is adapted to support a second belt device 20, comprising supporting crosspieces 22, 24 and a conveyor belt 26.

Said second device with a belt 20 presents at least one of its parts set at a second height H₂, in relation to the reference plane T-T.

The second conveyor belt 26 is preferably fitted with a cover 28 that is made of a material adapted to drag the items set on said conveyor belt.

Moreover, the colour of said cover 28 is preferably adapted to create a chromatic contrast with the items.

Preferably, said heights H₁, H₂ are adjustable. Moreover, said second height H₂ is preferably lower than said first height H₁.

During normal operation of device 1, the first conveyor belt 14 presents a dragging direction D₁ that is adapted to move the items towards the second conveyor belt 26.

With reference to said dragging direction, the terms "upstream" and "downstream" are defined referring to areas set successively one after another according to said dragging direction.

A loading area 30 is foreseen upstream from the first conveyor belt 14, where the jumbled items are fed randomly.

According to a preferred form of embodiment, device 1 comprises diverting devices that are adapted to divert the items moving towards set areas of said belts 14, 26.

According to a preferred form of embodiment, said diverting devices comprise at least one stationary, diverting part 32, for example positioned along at least one of said supporting crosspieces 10, 12, 22, 24 of the first conveyor belt 14 and/or of the second conveyor belt 26.

Said diverting parts 32 are set at a distance from the upper surface of said conveyor belts so as not to interfere with the movement of the respective covers.

Preferably, said diverting devices comprise a variety of diverting parts 32, for example positioned along said supporting crosspieces 10, 12, 22, 24 of the first conveyor belt 14 and of the second conveyor belt 26, for example converging from said crosspieces towards the central area of the belts.

Device 1 also comprises overturning devices adapted to overturn the jumbled items from said random order to said set or required position, adapted to subsequent working.

Said overturning devices comprise a plate 34 set downstream from said first conveyor belt 14.

The moving devices feed the jumbled items to said plate 34 in a first loading position, and in a second unloading position, said items are fed to a pick up area.

Said plate 34 comprises a loading part 34a for loading the fed items.

The items pass from the random order to a set order by rotation of the plate 34 from the loading position to the unloading position.

In other words, said plate is hinged to the supporting structure 2 of the device, for example to said supporting beams, along a hinging axis X-X.

Said plate is adapted to pass from the loading position, where the upper surface of the plate is basically level with the upper surface of the first conveyor belt 14, to the unloading position, where the upper surface of the plate 34 is basically perpendicular to the upper surface of the second conveyor belt 26.

In a preferred form of embodiment, in said loading position, the plate 34 is inclined in relation to the upper surface of the first conveyor belt, to aid loading of the items onto said plate.

Preferably, said inclination is equal to 5 hexagesimal degrees, to make a slope in relation to the surface of the first conveyor belt, referring to the direction of movement of the items.

In a preferred form of embodiment, in said unloading position, the plate 34 is not perpendicular to the upper surface of the second conveyor belt, but inclined, to aid unloading and overturning of the items on said second belt.

Said inclination is preferably equal to 95 hexagesimal degrees in relation to the upper surface of the first conveyor belt.

To make said rotation, said plate 34 acts with driving devices comprising a piston-cylinder system 36, which is a pneumatic or oleo-dynamic type for example.

Said piston-cylinder system is preferably hinged to the plate 34 and supporting structure 2, to make a sort of connecting rod to fit the position of the plate 34.

In a preferred form of embodiment, said device 1 also comprises dampening devices, adapted to dampen any action in the pick up area of pick up devices acting with said device.

Preferably, said dampening devices comprise a piston-cylinder type dampening system 38 connected to the first conveyor belt 14 and/or second conveyor belt 26.

In other words, in said form of embodiment, the supporting beams 10, 12, 22, 24 of the first or second conveyor belt are hinged to the supporting structure 2 and also connected to said dampening piston-cylinder 38 system, for example level with a part distanced from the hinged part on the supporting structure 2.

The first belt device 8 and the second belt device 20 are preferably hinged to the supporting structure upstream, referring to the direction of movement of the items, whilst said piston-cylinder dampening system 38 is connected downstream from said belt devices.

In other words again, said dampening system 38 is adapted to dampen vertical movement of said belt devices and support said overhanging belt devices.

Moreover, device 1 comprises discarding devices towards which the overturned items, which are not yet positioned in the required order for subsequent working, are moved.

According to a preferred form of embodiment, said discarding devices comprise a chute 40 set downstream from the device.

Said discarding devices preferably act with recovery devices adapted to direct the randomly positioned, overturned items back to the loading area 30 of device 1 again.

Said chute can preferably be adjusted in height, in other words its height of reference in relation to the reference plane may vary depending on the requirements.

During normal operation of device 1, the jumbled items are fed to the loading area 30 of the first conveyor belt 14 and moved towards the pick up area.

The diverting devices are set along the path followed by the jumbled items and interfere with the path followed by said items, for example diverting them towards the central part of said belt.

According to a preferred form of embodiment, said device acts with devices for detecting the position of the jumbled items.

Said detection devices preferably comprise a first telecamera set in a position that is adapted to detect the position of the jumbled items before said items are fed onto the plate 34 or already loaded onto the plate 34.

According to a preferred form of embodiment, said first telecamera surmounts the area of the first conveyor belt next to the plate 34.

The first telecamera acquires the image of the item to be fed to the plate.

Said telecamera is operatively connected to a control system of device 1 that is adapted to compare the acquired image of the item to be fed with an image of reference of the ordered item, in other words the item in the right position for subsequent working.

If said acquired image matches said image of reference, it is not necessary for the item to be overturned.

The item that is not overturned, but already in the required or right position, is fed to the plate 34 and taken from here by pick up devices.

For example, said pick up devices comprise a robot fitted with gripping devices, adapted to pick up the item and feed it to a machine, for example a tool machine, for subsequent working.

Clearly in this situation, said pick up area is made from a part of the upper surface of the conveyor belt 14.

If said acquired image does not match said image of reference, the item needs to be overturned to have an item overturned in the required or right order.

In this case, the detection devices act with the device control system and control the rotation of the plate.

Due to the simple force of gravity or, in a preferred form of embodiment, with the aid of foreseen thrusting devices, the item is overturned onto the second conveyor belt 26.

Said second conveyor belt, which preferably acts with additional diverting parts to divert the overturned item towards the central part of said second belt, moves the overturned item towards the area downstream from the second conveyor belt 26.

A second telecamera, which surmounts the terminal area of the second conveyor belt, acquires the image of the overturned item.

If the image of the overturned item matches the image of reference of the item in the required order, the device control system commands the item in the right position to be picked up from the second conveyor belt.

Clearly, in this case, said pick up area is made from a part of the upper surface of the second conveyor belt 26.

If the image of the overturned item still does not match the image of reference of the item in the required position, the device control system commands a further movement of the second conveyor belt 26, which takes the item that is overturned but still not in the required position towards the unloading devices, in other words, towards the chute 40.

Unusually, the device according to the present invention is constructionally simple and nonetheless reliable with regard to overturning the jumbled items.

Advantageously, the device presents regular working, wherein the items to be overturned rarely become blocked in one part of the device, thus preventing continued working.

According to an even further advantageous feature, the position of the items can be detected by a system comprising only two telecameras, since the path of the jumbled items is guided towards the image acquisition areas.

Also advantageously, the action of the gripping robot, which sometimes almost knocks the conveyor belts, does not affect the whole structure.

According to an even further advantageous feature, the device can easily be adapted to items of varying shapes and sizes, by suitably adjusting the heights of the essential parts.

It is clear that numerous variations can be made to the device according to the present invention.

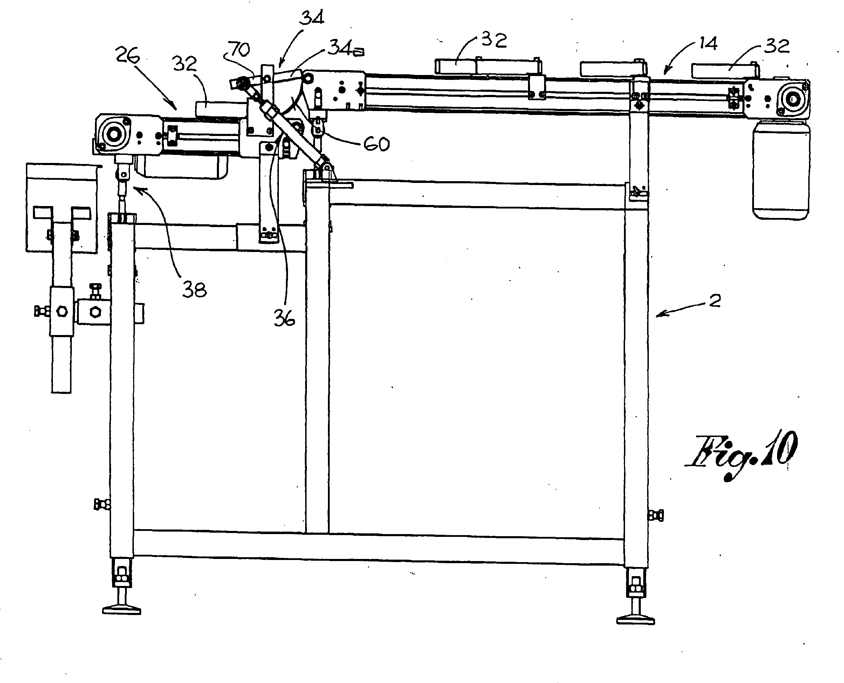

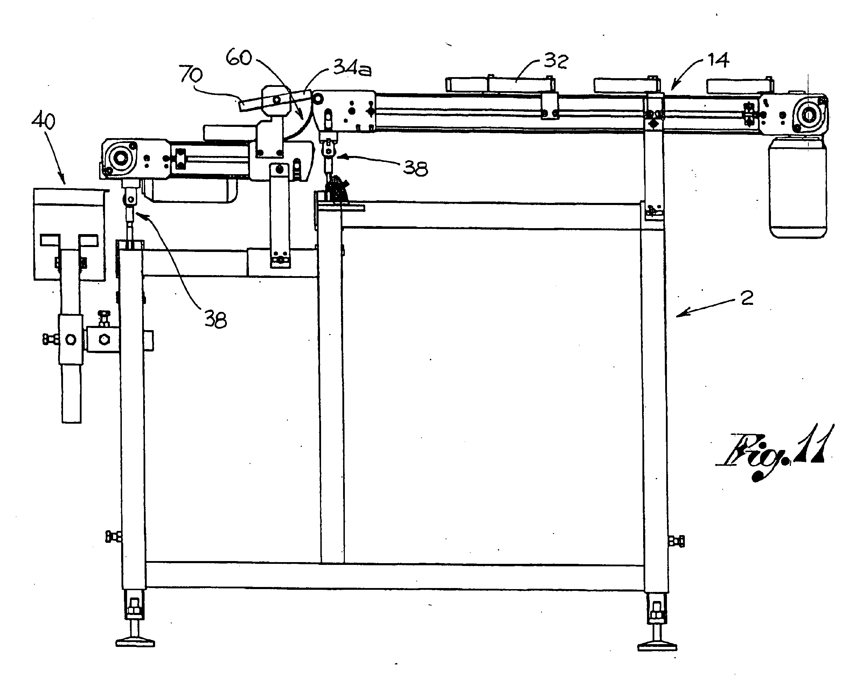

For example, in a varied form of embodiment, the plate 34 is fitted with an overturning part 50 called a whisker (figures 4a, 4b, 5a and 5b).

In other words, said plate 34, downstream from the first conveyor belt 14, has a set of side walls 52, which define the plate, except along the side where the items access said plate from the first conveyor belt.

In particular, said plate is fitted with a transversal, side wall 54, basically arranged perpendicularly to the direction of movement D₁ of the items.

According to said variation of embodiment, the height of said transversal, side wall is greater than the height of the remaining side walls. According to this variation, said transversal, side wall is defined as overturning part.

The item loaded onto the plate is set against said wall before being overturned by the rotating plate.

According to a further variation of embodiment, said overturning part 50 comprises a small crosspiece that can be connected to said transversal, side wall so that it protrudes in relation to the remaining side walls (figures 4b and 5b).

In other words, said small crosspiece, connected to the transversal, side wall of the plate 34, has at least one part protruding in relation to the height of at least one of the remaining side walls of the plate 34.

Advantageously, said overturning part facilitates the overturning of the item loaded onto the plate 34.

Also advantageously, said overturning part can easily be moved and replaced to suit the different needs of the various shaped and sized items to be overturned.

According to a further variation of embodiment, said item overturning devices are "inverse rotation" type (figures from 6 to 11).

In said variation of embodiment, device 1 also comprises an overturning chute 60 that acts with the plate 34 to succeed in overturning the items.

Said overturning chute 60, which preferably has a curvilinear profile, is downstream from the first belt device 8 that is connected to the upper surface of the first conveyor belt 14 and to the upper surface of the second conveyor belt 26.

Said overturning chute is at least partially surmounted by the plate 34. In particular, said overturning chute 60 is surmounted by the loading part 34a of said plate 34.

Moreover, said overturning chute 60 faces the part of the plate 34 with its concave part.

The hinging axis X-X of the plate 34 at the supporting structure 2 or at the supporting crosspieces 10, 12 of the first belt device 8 is set downstream from the loading area of the items on the plate 34.

In a variation of embodiment, said plate 34 is moved by driving devices 36 comprising a system fitted with a rotating piston-cylinder.

In a further variation of embodiment, said plate 34 is operatively connected to a linear type piston-cylinder system.

In an even further variation of embodiment, said plate is operatively connected to guide devices adapted to guide said plate from the loading position to the unloading position by rotation and translation that is by rototranslation.

Said guide devices comprise at least one guide plate 61 fitted with a groove 62 that defines a path for the hinging axis X-X of the plate 34 from the loading position to the unloading position and vice versa (figure 9).

Said path defined by the guide devices is adapted to distance said hinging axis X-X of the plate 34 from the transversal end of the first conveyor belt 14 whilst rotating the plate.

According to a further variation of embodiment, said plate has a connecting layer 70 adapted to act with said driving devices, for example a linear piston-cylinder system (figures 10 and 11).

Said connecting layer 70 and said loading part of the plate 34 preferably appear as one single flat part and the connection point of the plate with the piston-cylinder system is downstream from the hinging axis X-X of the plate, said axis in turn being downstream from the loading part 34a of the plate 34.

According to a variation of embodiment, said driving devices 36 comprise a rotating piston-cylinder system (figure 11).

In said variation of embodiment, the layer 70 and the loading part 34a have interchangeable functions.

In other words, after a 180 degree hexagesimal rotation of the plate 34, the loading part 34a moves into the position of the layer 70 and the layer 70 moves into the position of the plate 34, taking on the function of the loading part 34a.

The item is loaded onto the loading area of the plate 34 during normal operation of the device, according to the "inverse rotation" variations.

If the position of the loaded item is incorrect, in other words, if the item is not in the required position, the device control system commands the motor devices, and they carry out the rotation or rototranslation of the plate 34, which opens onto the overturning chute, like a trapdoor.

The loaded item moves from the plate 34 to the chute, for example by gravity. The item slides along the overturning chute and reaches the second conveyor belt in an overturned position.

These variations are also clearly included within the field of protection, as defined by the following claims.

## Claims

1. Device (1) for overturning items comprising:
- a loading area (30), where jumbled items are fed randomly, and a pick up area where the items, in a set order, are picked up for subsequent working;
- device (8) for moving said items from said a loading area (30), upstream from said device for moving, to said pick up area, downstream from said loading area (30),
- overturning devices adapted to overturn the jumbled items from said random order to said set order;
in which said overturning devices comprise a plate (34) to which said moving device (8) feed said jumbled items, in a first loading position, and from where said items are fed to the pick up area, in a second unloading position, moving from a random order to a set order by means of rotating said plate from the loading position to the unloading position-, said device being **characterized in that** it comprises a replaceable overturning part (50) against which the item to be overturned is positioned during rotation of the plate.

2. Device according to claim 1, wherein said moving device comprise a first belt device (8) and a second belt device (20), said second device (20) being set downstream from said first device (8) and being set at a height (H₂) that is lower than the height (H₁) where the first device (8) is set.

3. Device according to claim 1 or 2, wherein said moving devices comprise a cover (16,28) made of a material that is adapted to drag the items to make a chromatic contrast with said items, which can be detected by image acquisition devices connectable to said device (1).

4. Device according to any one of the previous claims, comprising diverting devices adapted to interfere with the movement of the items to divert their path.

5. Device according to claim 4, wherein said diverting devices comprise at least one diverting part (32).

6. Device according to claim 4 or 5, wherein said diverting devices are adapted to divert the path of said items from a side area to a central area of at least one conveyor belt (14,26).

7. Device according to claim 5 or 6, wherein said diverting parts are spaced longitudinally along said conveyor belts (14,26).

8. Device according to any one of the previous claims, also comprising gripping devices which can be connected to said device (1) and dampening devices adapted to dampen the action of the item gripping devices in the pick up area.

9. Device according to claim 8, wherein said dampening devices comprise at least one dampening part (38) that is also adapted to support said overhanging item moving devices.

10. Device according to claim 9, wherein said dampening devices comprise at least one piston-cylinder dampening (38) system.

11. Device according to any one of the previous claims, also comprising unloading devices adapted to direct the overturned items in an incorrect position.

12. Device according to claim 11, wherein said unloading devices comprise a chute (40).

13. Device according to any one of the previous claims, wherein said overturning part (50) protrudes in height in relation to at least one side wall (50, 52, 54) of said plate (34).

14. Device according to any one of the previous claims, wherein, in the loading position, said plate (34) has an inclined upper surface in relation to the upper surface of a first conveyor (14) for feeding the jumbled items.

15. Device according to claim 14, wherein said inclination is such that it creates a slope according to the direction of movement (D₁) of the items.

16. Device according to any one of the previous claims, wherein, in the unloading position, said plate (34) has a non perpendicular surface in relation to the upper surface of a second conveyor belt (26).

17. Device according to claim 16, wherein said inclination is such that the upper surface of the plate (34) creates an angle greater than a right angle with the upper surface of a first conveyor belt (16)

18. Device according to any one of the previous claims, wherein said plate (34) has a hinging axis (X-X) downstream in relation to a loading portion (34a) of the plate (34), where the item to be overturned is set.

19. Device according to claim 18, wherein said device (1) comprises an overturning chute (60) set downstream from a conveyor belt (14) of a first belt device (8), said overturning chute being connected to the upper surface of a conveyor belt (26) of a second belt device (20).

20. Device according to claim 18 or 19, wherein said device (1) comprises guide devices for the plate (34).

21. Device according to claim 20, wherein said guide devices comprise at least one guide plate (61) with a groove (62) defining a path for a hinging axis (X-X) of the plate (34).

22. Device according to any one of the previous claims, wherein said plate (34) is driven to rotate by a rotating piston-cylinder system.

23. Device according to claim 22, wherein said plate, completes a 180 degree hexagesimal rotation always in the same direction of rotation, from the loading position to the successive loading position.

24. System for items comprising a device for overturning said items, according to any one of the previous claims.

25. System according to claim 24, comprising image acquisition devices, which are operatively connected to a system control system.

26. System according to claim 25, wherein said image acquisition devices comprise at least one telecamera.

27. System according to any one of the claims from 24 to 26. comprising item pick up devices that are operatively connected to a system control system.

28. System according to any one of the claims from 24 to 27. also comprising recovery devices adapted to recover the overturned items incorrectly positioned and feed them again to said loading area of the device (1).

## Patentansprüche

1. Vorrichtung zum Wenden von Gegenständen, umfassend eine Ladefläche (30), auf die vermengte Gegenstände zufallsverteilt geführt sind und eine Abnahmefläche, von der die geordneten Gegenstände für die Weiterarbeitung abgenommen werden;
eine Beförderungsvorrichtung zum Bewegen der Gegenstände von der Ladefläche (30), die vor dieser Vorrichtung angeordnet ist, zu der Abnahmefläche, die hinter der Ladefläche sich befindet;
Wendevorrichtungen, die geeignet sind, die vermengten Gegenstände aus der zufallsverteil-ten Ordnung in eine gerichtete Ordnung zu wenden;
wobei die Wendevorrichtungen eine Platte (34) aufweisen, zu der die Beförderungsvorrich-tung die vermengten Gegenstände in eine erste Position, die Ladeposition, befördert und von dieser die Gegenstände zu der Abnahmefläche in eine zweite Position, die Entladeposition, bewegbar sind und eine Bewegung von der zufallsverteilten Ordnung zu einer gerichteten Ordnung in der Weise stattfindet, dass die Platte aus der Ladeposition in die Entladeposition sich dreht, **dadurch gekennzeichnet, dass** ein auswechselbares Wendeteil (50) vorhanden ist, an dem der zu wendende Gegenstand während der Rotation der Platte positioniert ist.

2. Vorrichtung nach Anspruch 1, **dadurch gekennzeichnet, dass** die Beförderungsvor-richtung eine erste Bandeinrichtung (8) und eine zweite Bandeinrichtung (20) aufweist, die hinter der ersten Bandeinrichtung (8) angeordnet ist und sich auf einer niedrigeren Höhe (H2) als die Höhe (H1) der ersten Bandeinrichtung (8) befindet.

3. Vorrichtung nach Anspruch 1 oder 2, **dadurch gekennzeichnet, dass** die Beförde-rungseinrichtung einen Belag (16, 28) aus einem Material umfasst, das die Gegenstände mit sich zieht und zu den Gegenständen einen Farbkontrast bildet, der durch Bilderfassungsgeräte detektierbar ist, die an die Vorrichtung (1) anschließbar sind.

4. Vorrichtung nach jedem der voranstehenden Ansprüche, **dadurch gekennzeichnet, dass** Ablenkeinrichtungen in die Bewegung der Gegenstände eingreifen, um sie aus ihrem Verlauf abzulenken.

5. Vorrichtung nach Anspruch 4, **dadurch gekennzeichnet, dass** die Ablenkeinrichtun-gen zumindest ein Ablenkteil (32) aufweisen

6. Vorrichtung nach Anspruch 4 oder 5, **dadurch gekennzeichnet, dass** die Ablenkein-richtungen den Verlauf der Gegenstände von einer Seitenfläche zu einer Zentralfläche auf zumindest einem der Förderbänder (14, 26) ablenken.

7. Vorrichtung nach Anspruch 5 oder 6, **dadurch gekennzeichnet, dass** die Ablenkteile entlang der Förderbänder (14, 26) räumlich längs verlaufen.

8. Vorrichtung nach jedem der voranstehenden Ansprüche, **dadurch gekennzeichnet, dass** Greifermittel (2) und Dämpfungsmittel zum Dämpfen der Arbeitsweise der Greifermittel in der Abnahmefläche vorhanden sind.

9. Vorrichtung nach Anspruch 8, **dadurch gekennzeichnet, dass** die Dämpfungsmittel zumindest ein Dämpfungsteil (38) aufweisen, das überhängende Beförderungseinrichtungen für die Gegenstände abstützt.

10. Vorrichtung nach Anspruch 59, **dadurch gekennzeichnet, dass** die Dämpfungsmittel aus zumindest einem Kolben-Zylinder-Dämpfungssystem (38) bestehen.

11. Vorrichtung nach jedem der voranstehenden Ansprüche, **dadurch gekennzeichnet, dass** Entladeeinrichtungen die gewendeten Gegenstände in eine Fehlposition lenken.

12. Vorrichtung nach Anspruch 11, **dadurch gekennzeichnet, dass** die Entladeeinrichtun-gen eine Absturzrinne (40) umfassen.

13. Vorrichtung nach jedem der voranstehenden Ansprüche, **dadurch gekennzeichnet, dass** das Wendeteil (50) höhenmäßig in Bezug auf zumindest eine Seitenwand (52, 54) der Platte (34) vorspringt.

14. Vorrichtung nach jedem der voranstehenden Ansprüche, **dadurch gekennzeichnet, dass** die Platte (34) in der Ladeposition eine schräge obere Fläche in Bezug auf die obere Flä-che eine ersten Förderbandes (14) für die Beförderung der vermengten Gegenstände aufweist.

15. Vorrichtung nach Anspruch 14, **dadurch gekennzeichnet, dass** die Schräge derart ist, dass sie ein Gefälle in Bewegungsrichtung (D1) der Gegenstände schafft.

16. Vorrichtung nach jedem der voranstehenden Ansprüche, **dadurch gekennzeichnet, dass** die Platte (34) in der Entladeposition eine nicht lotrechte Fläche in Bezug auf die obere Fläche eines zweiten Förderbandes (26) aufweist.

17. Vorrichtung nach Anspruch 16, **dadurch gekennzeichnet, dass** die Schräge derart ist, dass die obere Fläche der Platte (34) einen Winkel größer als ein rechter Winkel mit der obe-ren Fläche eines ersten Förderbandes (14) einschließt.

18. Vorrichtung nach jedem der voranstehenden Ansprüche, **dadurch gekennzeichnet, dass** die Platte (34) eine Schwenkachse (x-x) unterhalb eines Ladeteils (34a) der Platte (34) besitzt, auf dem der zu wendende Gegenstand aufgebracht ist.

19. Vorrichtung nach Anspruch 18, **dadurch gekennzeichnet, dass** die Vorrichtung
(1) eine Wenderinne (60) hinter einem Förderband (14) einer ersten Bandeinrichtung (8) auf-weist und dass die Wenderinne mit der oberen Fläche eines Förderbandes (26) einer zweiten Bandeinrichtung (20) verbunden ist.

20. Vorrichtung nach Anspruch 18 oder 19, **dadurch gekennzeichnet, dass** die Vorrich-tung (1) Führungseinrichtungen für die Platte (34) enthält.

21. Vorrichtung nach Anspruch 20, **dadurch gekennzeichnet, dass** die Führungseinrich-tungen zumindest eine Führungsplatte (61) mit einer Nut (62) aufweisen, die eine Führungs-bahn für eine Schwenkachse (x-x) der Platte (34) bildet.

22. Vorrichtung nach jedem der voranstehenden Ansprüche, **dadurch gekennzeichnet, dass** die Platte (34) durch ein Rotations-Kolben-Zylindersystem rotationsmäßig antreibbar ist.

23. Vorrichtung nach Anspruch 22, **dadurch gekennzeichnet, dass** die Platte (34) eine 180°-Drehung stets in die gleiche Drehrichtung von einer Ladeposition zu der nachfolgenden Ladeposition ausführt.

24. System für Gegenstände, umfassend eine Vorrichtung zum Wenden von Gegenstän-den gemäß jedem der voranstehenden Ansprüche.

25. System nach Anspruch 24, umfassend Bilderfassungsgeräte, die operativ mit einem Kontrollsystem des Systems verbunden sind.

26. System nach Anspruch 25, **dadurch gekennzeichnet, dass** die Bilderfassungsgeräte zumindest eine Fernkamera umfassen.

27. System nach jedem der Ansprüche 24 bis 26, umfassend Abnahmeeinrichtungen, die operativ mit einem Kontrollsystem des Systems verbunden sind.

28. System nach jedem der Ansprüche 24 bis 27, umfassend Bergungseinrichtungen, die falsch positionierte, gewendete Gegenstände bergen und sie wieder der Ladefläche der Vor-richtung (1) zuführen.

## Revendications

1. Dispositif (1) pour retourner des objets comprenant :
- une zone de chargement (30), où des objets en vrac sont alimentés de façon aléatoire, et une zone de prélèvement où les objets, dans un ordre fixé, sont prélevés en vue d'un traitement ultérieur ;
- un dispositif (8) pour déplacer lesdits objets de ladite zone de chargement (30), située en amont dudit dispositif pour le déplacement, jusqu'à ladite zone de prélèvement, située à l'aval de ladite zone de chargement (30) ;
- des dispositifs de retournement adaptés à retourner les objets en vrac les faisant passer dudit ordre aléatoire vers ledit ordre fixé dans lequel lesdits dispositifs de retournement comprennent une plaque (34) à laquelle ledit dispositif mobile (8) alimente lesdits objets en vrac, en une première position de chargement, et depuis laquelle lesdits objets sont alimentés à la zone de prélèvement, en une seconde position de déchargement, passant d'un ordre aléatoire à un ordre fixé par la rotation de ladite plaque depuis la position de chargement jusqu'à la position de déchargement, ledit dispositif étant **caractérisé en ce qu'**il comprend une pièce de retournement remplaçable (50) contre laquelle l'objet devant être retourné est placé pendant la rotation de la plaque.

2. Dispositif selon la revendication 1, dans lequel ledit dispositif mobile comprend un premier dispositif à bande (8) et un second dispositif à bande (20), ledit second dispositif (20) étant mis à l'aval dudit premier dispositif (8) et réglé à une hauteur (H2) qui est inférieure à la hauteur (H1) à laquelle le premier dispositif (8) est réglé.

3. Dispositif selon la revendication 1 ou 2, dans lequel ledit dispositif mobile comprend un cache (16, 28) en un matériau approprié à entraîner les objets pour créer un contraste chromatique avec lesdits objets, qui peut être détecté par des dispositifs d'acquisition d'image pouvant être connectés audit dispositif (1).

4. Dispositif selon l'une quelconque des revendications précédentes, comprenant des dispositifs de déviation adaptés à perturber le mouvement des objets afin de dévier leur trajectoire.

5. Dispositif selon la revendication 4, dans lequel lesdits dispositifs de déviation comprennent au moins une pièce de déviation (32).

6. Dispositif selon la revendication 4 ou 5, dans lequel lesdits dispositifs de déviation sont adaptés à dévier la trajectoire desdits objets depuis une zone latérale jusqu'à une zone centrale d'au moins une bande de convoyeur (14, 26).

7. Dispositif selon la revendication 5 ou 6, dans lequel les pièces de déviation sont espacées longitudinalement le long desdites bandes de convoyeur (11, 26).

8. Dispositif selon l'une quelconque des revendications précédentes, comprenant également des dispositifs de préhension qui peuvent être reliés audit dispositif (1) et des dispositifs d'amortissement adaptés à amortir l'action des dispositifs de préhension d'objets dans la zone de prélèvement.

9. Dispositif selon la revendication 8, dans lequel lesdits dispositifs d'amortissement comprennent au moins une pièce d'amortissement (38) qui est également adaptée à soutenir lesdits dispositifs de déplacement d'objets en porte-à-faux.

10. Dispositif selon la revendication 9, dans lequel lesdits dispositifs d'amortissement comprennent au moins un système d'amortissement à piston-cylindre (38).

11. Dispositif selon l'une quelconque des revendications précédentes, comprenant également des dispositifs de chargement adaptés à diriger les objets retournés dans une position incorrecte.

12. Dispositif selon la revendication 9, dans lequel lesdits dispositifs de chargement comprennent une glissière (40).

13. Dispositif selon l'une quelconque des revendications précédentes, dans lequel ladite pièce de retournement (50) fait saillie en hauteur par rapport à au moins une paroi latérale (50, 54) de ladite plaque (34).

14. Dispositif selon l'une quelconque des revendications précédentes, dans lequel, dans la position de chargement, ladite plaque (34) a une face supérieure inclinée par rapport à la face supérieure d'un premier convoyeur (14) pour alimenter les objets en vrac.

15. Dispositif selon la revendication 14, dans lequel ladite inclinaison est telle qu'elle crée une pente suivant le sens du mouvement (D1) des objets.

16. Dispositif selon l'une quelconque des revendications précédentes, dans lequel, dans la position de déchargement, ladite plaque (34) a une face non perpendiculaire à la face supérieure d'une seconde bande de convoyeur (26).

17. Dispositif selon la revendication 16, dans lequel ladite inclinaison est telle que la face supérieure de la plaque (34) fait un angle supérieur à un angle droit avec la face supérieure d'une première bande de convoyeur (26).

18. Dispositif selon l'une quelconque des revendications précédentes, dans lequel ladite plaque (34) a un axe d'articulation (X-X) en aval par rapport à une partie de chargement (34a) de la plaque (34), où l'objet devant être retourné est installé.

19. Dispositif selon la revendication 18, dans lequel ledit dispositif (1) comprend une glissière de retournement (60) installée en aval par rapport à une bande de convoyeur (14) d'un premier dispositif à bande (8), ladite glissière de retournement étant reliée à la face supérieure d'une bande de convoyeur (26) d'un second dispositif à bande (20).

20. Dispositif selon la revendication 18 ou 19, dans lequel ledit dispositif (1) comprend des dispositifs de guidage pour la plaque (34).

21. Dispositif selon la revendication 20, dans lequel lesdits dispositifs de guidage comprennent au moins une plaque de guidage (61) avec une rainure (62) définissant un chemin pour un axe d'articulation (X-X) de la plaque (34).

22. Dispositif selon l'une quelconque des revendications précédentes, dans lequel ladite plaque (34) est entraînée à tourner sous l'action d'un système piston-cylindre rotatif.

23. Dispositif selon la revendication 22, dans lequel ladite plaque effectue une rotation complète de 180 degrés sexagésimaux toujours dans le même sens de rotation, de la position de chargement à la position de chargement suivante.

24. Système pour objets comprenant un dispositif de retournement desdits objets, selon l'une quelconque des revendications précédentes.

25. Système selon la revendication 11, comprenant des dispositifs d'acquisition d'image, qui sont reliés fonctionnellement à un système de commande de système.

26. Système selon la revendication 25, dans lequel lesdits dispositifs d'acquisition d'image comprennent au moins une télécaméra.

27. Système selon l'une quelconque des revendications 24 à 26 comprenant des dispositifs de prélèvement d'objets qui sont reliés fonctionnellement à un système de commande de système.

28. Système selon l'une quelconque des revendications 24 à 27 comprenant des dispositifs de récupération adaptés à récupérer les objets retournés placés incorrectement et les alimenter de nouveau à ladite zone de chargement du dispositif (1).
